Europäisches Patentamt

European Patent Office

Office européen des brevets

(11) Numéro de publication: **0 301 495 B1**

(12) **FASCICULE DE BREVET EUROPEEN**

(45) Date de publication de fascicule du brevet: **17.03.93** (51) Int. Cl.5: **H01S 3/097**

(21) Numéro de dépôt: **88112116.4**

(22) Date de dépôt: **27.07.88**

(54) **Laser à décharge dans un écoulement transversal turbulent.**

(30) Priorité: **27.07.87 FR 8710629**

(43) Date de publication de la demande:
**01.02.89 Bulletin 89/05**

(45) Mention de la délivrance du brevet:
**17.03.93 Bulletin 93/11**

(84) Etats contractants désignés:
**AT BE CH DE ES FR GB IT LI NL SE**

(56) Documents cités:
**US-A- 3 720 885**

**IEEE JOURNAL OF OUANTUM ELECTRONICS, vol. OE-21, no. 2, février 1985, pages 113-116, IEEE, New York, US; R. McLEARY: "Operation of a CO2 mixing laser at atmospheric pressure"**

(73) Titulaire: **ALCATEL ALSTHOM COMPAGNIE GENERALE D'ELECTRICITE**
**54, rue La Boétie**
**F-75382 Paris Cédex 08(FR)**

(72) Inventeur: **Brunet, Henri**
**26, rue Hache**
**F-94240 l'Hay les Roses(FR)**
Inventeur: **Mabru, Michel**
**1, boulevard Pasteur**
**F-91440 Bures sur Yvette(FR)**
Inventeur: **Chauvet, Philippe**
**3, rue de l'Egalité**
**F-92290 Chatenay Malabry(FR)**

(74) Mandataire: **Weinmiller, Jürgen et al**
**Lennéstrasse 9 Postfach 24**
**W-8133 Feldafing (DE)**

## Description

La présente invention vise à la réalisation de faisceaux lumineux puissants et cohérents, notamment en lumière infrarouge, à partir d'un gaz dit actif. Ce gaz est excité par une décharge électrique pour y induire une inversion de population permettant une amplification du rayonnement et éventuellement une oscillation laser.

Il est connu que l'induction d'une turbulence dans le gaz actif permet de réaliser des décharges stables et uniformes dans des tubes de gros diamètres ((1)) (un tel chiffre entre doubles parenthèses renvoie pour plus d'information à un document correspondant indiqué à la fin de la présente description). Les décharges dans des mélanges $CO_2$-$N_2$-He sont caractérisées par des puissances spécifiques élevées variant de plus de 20 W/cm$^3$ pour des tubes de faible diamètre (par exemple 2cm) à environ 2.5 W/cm$^3$ pour des tubes de 10cm de diamètre.

Dans ces décharges, le champ électrique est confondu avec la direction de l'écoulement et avec celle du rayonnement et la décharge est alors appelée "décharge longitudinale turbulente" (type dit TAF d'après l'anglais "turbulent axial flow"). Une maquette de laser $CO_2$ industriel d'une puissance de 7kW a été réalisée en utilisant 4 tubes de 7,5cm de diamètre et de 80cm de longueur ((2)).

Les décharges TAF sont bien adaptées à la réalisation de lasers à écoulement longitudinal. Mais elles présentent l'inconvénient de nécessiter l'emploi d'un ou de deux compresseurs de type Roots pour engendrer la différence de pression créant les turbulences.

On connaît par ailleurs des lasers $CO_2$ dans lesquels l'écoulement est transversal par rapport à la direction du rayonnement. Ces lasers présentent un certain nombre d'avantages qui seront évoqués plus loin.

Dans la plupart des lasers à écoulement transversal connus, voir ((3)) ((4)) ((6)), une décharge uniforme dans des volumes de plusieurs litres est obtenue en utilisant de très nombreuses électrodes (quelques centaines) pour diviser la décharge en autant de décharges élémentaires. En général, une seule électrode est segmentée, la cathode ou l'anode, l'autre étant unique et constituée d'une grille ou d'une barre. Par exemple, pour un volume de 20 l (10 x 10 x 200 cm$^3$), le laser Toshiba de 5kW utilise un ensemble de 600 cathodes et de 3 anodes.

Des expériences de stabilisation par turbulence ont été décrites il y a plusieurs années ((8)) ((9)) en complément de l'utilisation de nombreuses cathodes (une ou plus par cm). Les dispositifs de turbulence étaient conçus pour uniformiser le profil de vitesse en amont des cathodes et créer des turbulences de faible échelle.

D'autres moyens ont aussi été utilisés pour améliorer la qualité des décharges. Dans certains lasers, des dispositifs de préionisation de la décharge sont ajoutés pour accroître l'uniformité de la décharge.

Il est aussi connu, dans le cas de volumes restreints, de remplacer l'excitation continue (ou alternative à quelques kHz) par une décharge radiofréquence (13 ou 27 MHz) pour obtenir ainsi des décharges stables et uniformes à haute pression ((5)) ((7)). Cette dernière technique présente l'inconvénient de nécessiter l'emploi d'une alimentation à radiofréquence dont le coût est supérieur à celui d'une alimentation continue ou alternative.

La présente invention a notamment pour but d'augmenter la puissance électrique susceptible d'être injectée dans la décharge d'un laser à écoulement transversal turbulent sans destabiliser cette décharge, de manière notamment à permettre d'augmenter la puissance lumineuse d'un tel laser.

Elle a aussi pour but d'uniformiser et/ou stabiliser une telle décharge.

Et elle vise à atteindre de tels buts d'une manière simple et économique, c'est-à-dire notamment avec un rapport de compression nettement inférieur à deux, obtenu à l'aide de moyens de pompage consommant une puissance mécanique nettement inférieure à celle qui serait consommée par des compresseurs habituels du type Roots pour maintenir l'écoulement turbulent du gaz actif et aussi avec un nombre restreint de circuits d'alimentation des électrodes. Elle vise plus particulièrement à réaliser ladite uniformisation et/ou stabilisation avec un nombre d'électrodes nettement inférieur à un par centimètre de largeur de la décharge.

Dans ces buts un laser selon la présente invention utilise des jets gazeux divergents dans lesquels sont formées des décharges électriques à partir d'électrodes amont localisées à l'orgine de ces jets. Plus spécifiquement, un objet de la présente invention est un laser à décharge dans un écoulement transversal turbulent, ce laser comportant :

- des moyens optiques pour faire osciller ou circuler un rayonnement lumineux,
- une chambre de décharge présentant une longueur entre une face amont et une face aval qui s'étendent selon une largeur et une hauteur de cette chambre,

- des moyens de circulation pour faire circuler un gaz actif dans cette chambre de décharge en formant un écoulement turbulent subsonique de ladite face amont à ladite face aval,

- et des moyens électriques pour créer au moins une décharge électrique dans ce gaz actif à l'intérieur de cette chambre de décharge, entre au moins une électrode amont et une électrode aval situées dans lesdites faces amont et aval, respectivement, pour que cette décharge soit uniformisée et/ou stabilisée par ledit écoulement turbulent et permette à ce gaz d'amplifier ledit rayonnement lumineux,

- lesdits moyens de circulation comportant,

- une pluralité de passages d'introduction dans ladite face amont pour permettre l'introduction du gaz actif dans la chambre de décharge, chacun de ces passages correspondant à un module de décharge qui est la partie de ladite chambre à décharge dans laquelle circule le gaz introduit par cet orifice, ce module présentant une surface amont et une surface aval qui sont les parties desdites faces amont et aval qui sont occupées par ce module, respectivement,

- des passages d'évacuation dans ladite face aval pour permettre l'évacuation du gaz actif hors de cette chambre,

- et des moyens de maintien de pression pour maintenir un rapport de pressions à l'injection supérieur à 1, ce rapport étant celui de la pression dudit gaz actif à l'amont de ce passage d'introduction à la pression de travail de ce gaz dans ladite chambre de décharge,

- ce laser étant caractérisé par le fait que chaque dit passage d'introduction est un orifice d'injection occupant une fraction minoritaire de l'aire de ladite surface amont et bordé d'une ou plusieurs parties réservées occupant le reste de cette face amont de manière que le gaz injecté par cet orifice forme un jet divergent correspondant laissant de côté un ou plusieurs espaces en coin faisant parties dudit module de décharge correspondant,

- ledit orifice d'injection étant muni d'une dite électrode amont pour former une décharge dans ledit jet divergent à partir de l'origine de celui-ci,

- au moins une partie d'au moins une dite électrode aval étant répartie dans cette surface aval pour diffuser ladite décharge électrique dans tout le volume de jet.

Ces espaces en coin sont au contact de cette ou de ces parties réservées et ils sont le siège de courants de recirculation constitués par du gaz actif détourné de ce jet. La pression y est légèrement réduite.

Selon cette invention on peut adopter de plus les dispositions suivantes qui sont avantageuses au moins dans certains cas :

- Ledit orifice d'injection occupe entre 5 et 30 % de l'aire de ladite surface amont,

- ladite longueur de la chambre de décharge étant comprise entre la moitié et le double de celle qui est nécessaire pour que chaque jet divergent occupe toute ladite surface aval dudit module de décharge correspondant,

- Ledit rapport de pressions à l'injection est compris entre 1,05 et 2. Ce rapport est choisi de manière que les courants gazeux de recirculation engendrés dans ledit espace en coin à partir dudit jet divergent fassent pénétrer ladite décharge électrique dans cet espace malgré la localisation de ladite électrode amont.

De plus, de par la pression réduite qui règne dans l'espace en coin, le champ électrique réduit E/N est augmenté ce qui favorise l'extension latérale de la décharge, ce champ électrique étant le rapport E/N du champ électrique E au nombre N de molécules gazeuses par unité de volume.

- Ladite surface amont et ledit orifice d'injection ont chacun un rapport de largeur à hauteur compris entre 0,5 et 2 et sont sensiblement concentriques de manière que les dits espaces en coin forment un anneau tout autour d'une partie amont dudit jet divergent.

- Le rapport de la longueur de ladite chambre de décharge à la plus petite dimension dudit orifice d'injection est compris entre 2 et 20, et typiquement entre 6 et 8.

- Ladite électrode amont correspondant à un dit orifice d'injection est unique, centrée sur cet orifice et située légèrement en aval.

- Plusieurs dits modules se succèdent selon la largeur de ladite chambre à décharge et ledit rayonnement circule ou oscille selon cette largeur.

- Lesdites électrodes amont sont alimentées séparément à courant sensiblement prédéterminé par lesdits moyens électriques et lesdites électrodes aval sont toutes constituées par une grille commune.

- Lesdits moyens de circulation du gaz actif comportent un ventilateur faisant circuler ce gaz en circuit fermé, et des moyens de refroidissement et des moyens de régénération continue de ce gaz sur ce circuit.

A l'aide des figures schématiques ci-jointes on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence. Le mode de mise en oeuvre décrit comporte les dispositions mentionnées ci-dessus comme avantageuses selon la présente invention. Il doit être compris que les éléments mentionnés peuvent être remplacés par d'autres éléments assurant les mêmes fonctions techniques.

La figure 1 représente une vue partielle en perspective avec éclaté partiel de la chambre de décharge d'un premier laser selon la présente invention, ce laser étant un émetteur décrit pour illustrer les principes de cette invention.

La figure 2 représente une vue en perspective de l'ensemble de ce laser.

La figure 3 représente une vue de la chambre de décharge de la figure 1 en coupe par un plan horizontal à mi-hauteur de cette chambre, avec représentation des jets gazeux en trait tireté, avec hachures pour représenter les zones occupées par les décharges électriques, et avec flèches pour représenter les écoulements gazeux.

La figure 4 représente une vue partielle en perspective d'un deuxième émetteur laser réalisé selon un mode préféré de mise en oeuvre de l'invention.

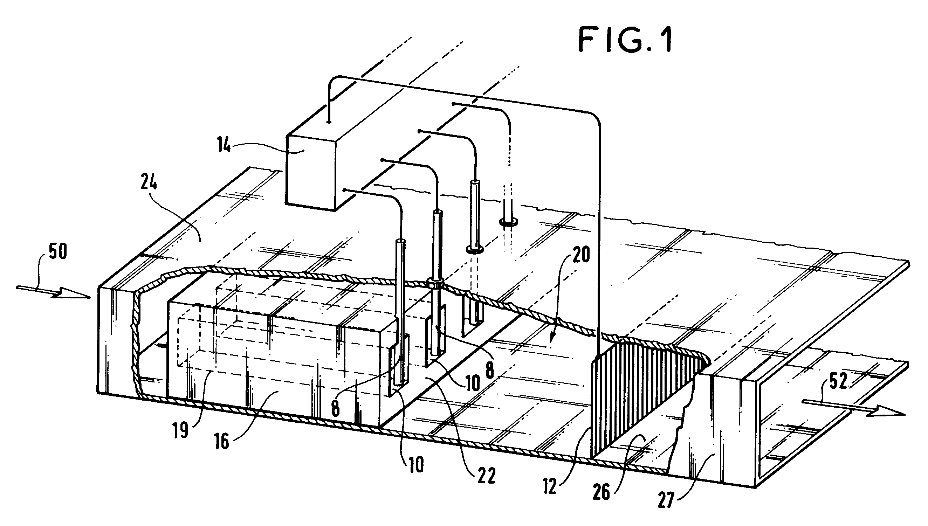

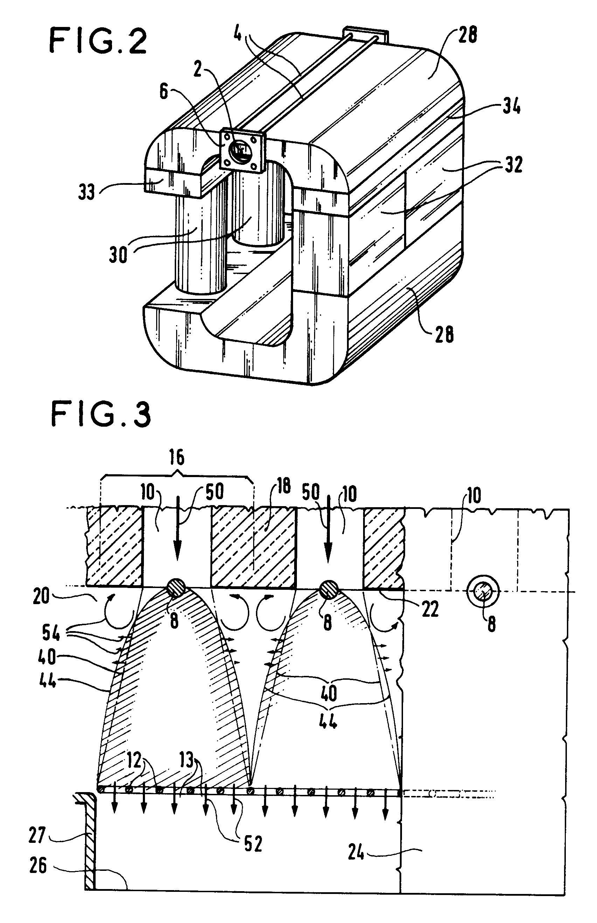

Dans ces émetteurs laser, lesdits moyens optiques font osciller le rayonnement lumineux dans une cavité optique occupant la chambre à décharge. Dans le premier laser ces moyens sont deux miroirs tels que 2 (fig.2), l'un étant partiellement transparent. La direction du rayonnement est celle de quatre tirants horizontaux tels que 4 qui s'étendent sur la largeur de la chambre à décharge et qui maintiennent ces miroirs par l'intermédiaire de plaques d'extrémités 6. Lesdits moyens électriques comportent pour chaque module, une électrode amont telle que la cathode 8 (fig.1 et 3). Celle-ci est constituée par un barreau vertical disposé dans l'axe de l'orifice d'injection du module 10. L'électrode aval est une anode 12 commune à tous les modules. Elle est constituée par une grille très transparente à barreaux verticaux. Les larges passages 13 entre ces barreaux constituent lesdits passages d'évacuation. Un bloc d'alimentation électrique 14 alimente d'une part individuellement chacune de ces cathodes à courant prédéterminé, en passant à travers la paroi isolante supérieure de la chambre de décharge 20. Il est connecté d'autre part à l'anode 12.

Chaque module tel que 16 comporte une partie d'un bloc isolant commun 18. Cette partie est celle qui entoure un canal d'amenée de gaz 10 qui est longitudinal et formé dans ce bloc. Ce canal est propre à ce module. Il débouche par un orifice d'injection tel que 10 dans la chambre de décharge 20. Lesdites parties réservées 22 de la face amont sont des parties pleines constituées par la surface de ce bloc au contact de cette chambre. Le module comporte aussi une partie des parois supérieure 24 et inférieure 26 de cette chambre et une partie de l'anode 12. Ces parois supérieure et inférieure se prolongent à l'amont et à l'aval de la chambre de décharge 20.

Lesdits moyens de circulation comportent des conduits en circuit fermé 28 (fig.2) pour amener le gaz à l'entrée desdits canaux d'amenée dans le bloc 18, et pour l'extraire en aval de l'anode 12, grâce à des ventilateurs 30.

En aval de l'anode 12 le gaz est guidé par des parois latérales telles que 27 qui se raccordent au conduit 28. La chambre de décharge comporte des ouvertures dans les parois latérales pour les miroirs tels que 2. Ceux-ci sont disposés à distance de la zone de décharge pour éviter qu'ils ne soient détériorés.

Sur les figures 1 et 3 la circulation du gaz actif est représentée par des flèches telles 50 en amont de la chambre de décharge, 52 en aval, et 54 dans lesdits espaces en coin.

On va maintenant expliquer tout d'abord les aspects principaux de la décharge transversale turbulente (TTF) selon l'invention.

Dans un plasma de décharge, le mouvement des ions positifs est identique à celui des particules neutres par suite de la fréquence élevée des collisions entre ces ions et ces particules neutres aux pressions utilisées. Par ailleurs, les électrons sont liés aux ions par les forces électriques qui assurent la neutralité du plasma. Il s'ensuit que les électrons suivent approximativement le mouvement des ions donc des particules neutres. C'est-à-dire que le courant de décharge transporté surtout par des électrons se déplace avec les masses de gaz qui sont surtout constituées par les particules neutres et les ions.

La présente invention permet d'étendre les dimensions transversales de la décharge en utilisant les mouvements aérodynamiques du gaz.

En effet, l'expansion brutale du gaz à travers l'orifice d'injection d'un module fait apparaître des courants de recirculation importants (voir fig.3) notamment vers les surfaces supérieure, inférieure et latérales de la cellule de décharge constituée par le gaz contenu dans ce module. Cette recirculation a lieu dans lesdits espaces en coin, qui sont compris entre d'une part le jet de gaz, d'autre part les surfaces supérieure, inférieure et latérales de cette cellule, et enfin les parties pleines de la surface amont. Elle amène une partie des particules à aller du centre vers ces surfaces supérieure, inférieure et latérales.

EP 0 301 495 B1

Considérons maintenant la distribution du champ électrique dans la cellule de décharge. Elle est caractérisée par une forte concentration vers l'électrode amont (en général la cathode) et elle tend à se limiter à une zone centrale qui a grossièrement la forme indiquée par la figure 3.

En l'absence d'écoulement turbulent, les électrons sont essentiellement répartis dans cette zone. Grâce aux mouvements du gaz et aussi parce que la pression du gaz est plus faible dans la zone de recirculation constituée par lesdits espaces en coin, les électrons sont entraînés en dehors de cette zone centrale et la décharge s'élargit sensiblement.

Par ailleurs, le haut niveau de turbulence produit par l'expansion brutale stabilise la décharge.

Plus particulièrement le laser décrit comporte des cathodes tubulaires 8 de 4mm de diamètre généralement refroidies et une grille faisant office d'anode. La hauteur de la chambre de décharge 20 est de 4cm et sa longueur de 6 à 10cm (voir.fig.1). La largeur de chaque cellule dans cette chambre, c'est-à-dire celle de chaque module est de 4cm. Une décharge de grande largeur peut être obtenue en juxtaposant des modules de 4cm de largeur (et de 4cm de hauteur).

Les turbulences nécessaires à la stabilisation la décharge sont obtenues dans chaque cellule en injectant un mélange $CO_2$-$N_2$-He par un orifice d'injection 10 carré de section nettement inférieure à celle de la cellule de décharge. Il est apparu que l'orifice d'injection devait occuper entre 5 et 50 %, et de préférence entre 5 et 30 %, par exemple 25 % environ de la surface amont du module correspondant.

La cathode est placée au milieu de cet orifice, légèrement en aval (une autre disposition est possible). Cet orifice est alimenté à partir d'un canal d'amenée de même section destiné à tranquilliser le flux gazeux avant son expansion à travers l'orifice dans la chambre de décharge.

Le rapport des pressions entre l'amont et l'aval est fonction de la section de l'orifice d'entrée des gaz et peut varier de 1.05 à 2.0.

Ce rapport et la surface de l'orifice d'introduction des gaz sont choisis de telle sorte que la vitesse d'injection soit légèrement supérieure à 200 m/s. Cela correspond à un rapport de section de 0,25 pour les conditions nominales de fonctionnement (P = 50 mbar - débit molaire = 0,15 mole/s). La différence de pression entre l'amont et l'aval est alors de 7 mbar.

Une réduction de la surface de l'orifice accroit la vitesse d'injection ainsi que la différence de pression.

La puissance électrique susceptible d'être injectée dans la décharge croît, comme pour les décharges longitudinales turbulentes, lorsque la pression amont croît. Elle varie de 3.5 à 6 $W/cm^3$ pour une décharge de 10cm de longueur établie dans un mélange $CO_2$-$N_2$-He = 0.04 - 0.48 - 0.48 à une pression d'environ 60 mbar.

Le laser selon l'invention est particulièrement avantageux aux faibles rapports de pressions.

A titre indicatif, lorsque le rapport de pression augmente de 1,1 à 1,2 la puissance spécifique injectée croit de 4,2 à 6,0 $W/cm^3$ pour les conditions nominales de fonctionnement.

La puissance spécifique injectée dans la décharge peut être sensiblement augmentée, en remplaçant l'alimentation continue par une alimentation alternative à fréquence supérieure à 10kHz. Dans ce cas un jeu symétrique d'électrodes doit être utilisé.

Compte tenu du faible rapport de pressions un ventilateur 30 de technologie aéronautique peut être utilisé pour assurer la circulation du mélange gazeux.

Pour obtenir une puissance laser de 3kW à partir d'une puissance spécifique de décharge de 4$W/cm^3$ et d'un rendement global de 15% le volume de décharge doit être d'environ 5000$cm^3$. Compte tenu des caractéristiques des modules étudiés cela conduit à la juxtaposition de 30 modules soit une largeur de 1.2m. Les caractéristiques principales de la décharge sont donc les suivantes :

| | |
|---|---|
| - Volume | 4.0 (hauteur)x 10 (longueur) x 120 (largeur) $cm^3$ |
| - Nombre de modules | 30 |
| - Pression dans la décharge | 55 mbar |
| - Rapport de pressions | 1.05 ou plus |
| - Débit volumétrique | 2000 l/s (à 55 mbar) |
| - Puissance électrique spécifique | 4.0 $W/cm^3$ |
| - Tension de charge entre électrodes | 4.0 kV |
| - Coefficient maximal d'amplification | 0.7 % par cm |

La cavité est du type instable. Elle comporte trois passages repliés en X d'une longueur totale de 3.60m environ. La longueur effective d'amplification est d'environ 4.2 m ce qui donne un gain nettement supérieur à 1.5. Un facteur de grandissement M = 2 peut être employé sans difficulté. Une cavité à 2 passages en U peut aussi être utilisée.

Le coefficient d'amplification varie peu dans le sens vertical et est symétrique par rapport au plan médian. Cette symétrie n'existe pas dans les décharges transversales où le champ électrique est perpendiculaire à l'écoulement gazeux.

La stabilité mécanique de la cavité peut être assurée soit classiquement par les tirants 4 en acier à faible dilatation, soit par des tubes en composite carbone-carbone (L = 1,4m, environ).

La circulation des gaz dans le circuit fermé est assurée par deux ventilateurs 30 d'un débit unitaire de 1000 l/s à 55 mbar et permettant une surpression de 10 mbar. Deux échangeurs thermiques 32 et 33 de 20 kW au total ne créent qu'une faible perte de charge (moins de 2 mbar) et permettent de conserver le mélange gazeux à température constante. Un dispositif 34 de catalyse des gaz est aussi incorporé à la boucle de circulation des gaz ainsi qu'un dispositif non représenté de renouvellement partiel du mélange.

Le bloc d'alimentation électrique 14 (5 kV - 5A) est une alimentation continue régulée en courant. Il pourrait être remplacé par une alimentation alternative.

La puissance laser maximale est de 3.6 kW en fonctionnement multimode. Elle est de 2.8 kW avec une cavité instable avec M = 2, le diamètre extérieur du faisceau étant d'environ 3 cm.

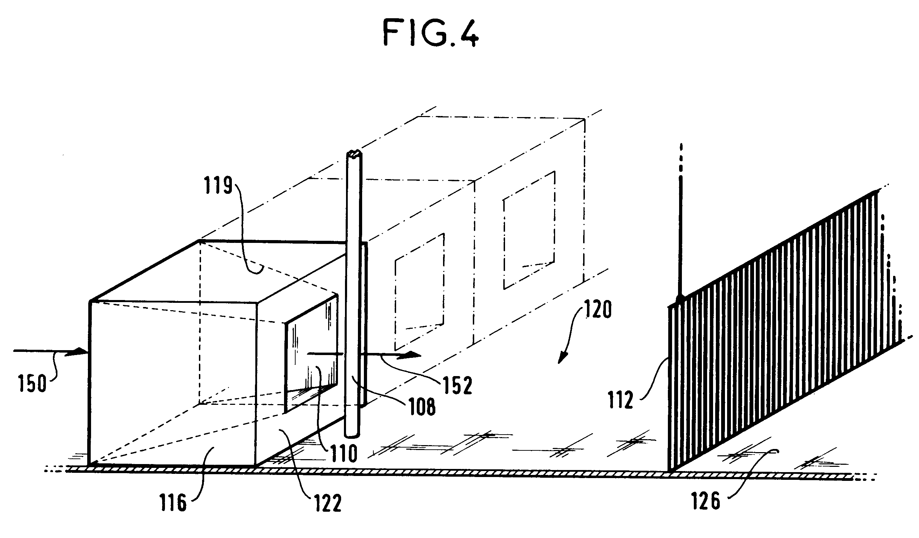

Le deuxième laser représenté partiellement à la figure 4 est analogue au premier précédemment décrit, sauf sur les points indiqués ci-après.

Les éléments analogues à ceux de ce premier laser sont désignés par des nombres de références qui sont les mêmes sauf qu'ils sont augmentés de 100.

La cathode 108 est placée à 1 cm environ en aval de l'orifice d'injection 110. Ce dernier est alimenté à partir d'un canal d'amenée de gaz 119, de même section (ici 4 x 4 cm$^2$) à son entrée que celle de la cellule de décharge située en aval. Il est de forme à peu près pyramidale.

Sa section de sortie, qui constitue l'orifice d'injection, présente une section rectangulaire de 1,8 sur 2,2 cm. La longueur de la chambre à décharge est 10 cm.

Le laser selon l'invention peut présenter les avantages suivants :

- Absence de compresseurs Roots. Ceux-ci sont lourds, encombrants, bruyants, gros consommateurs d'énergie et ils polluent les gaz de la boucle. Les ventilateurs sont intégrés à la boucle de circulation. Ils consomment peu (3kW) et ne polluent pas le mélange gazeux après la phase de dégazage. Les vibrations et le bruit sont réduits.
- Utilisation d'une alimentation électrique de 5 kV. Une alimentation tout semi-conducteurs peut être réalisée. Les problèmes d'isolement électrique sont simples.
- Utilisation d'une cavité optique de faible longueur (1.40 m entre miroirs) ce qui permet de réaliser une structure mécanique simple et de très haute stabilité.
- Un encombrement et un poids extrêmement réduits. Le volume global (hors alimentation THT) est de l'ordre de 1 m$^3$.
- Compte tenu de sa simplicité, le coût de ce laser est remarquablement bas.

Les documents auxquels il a été fait référence sont les suivants :

((1)) H.BRUNET, M. MABRU and M. GASTAUD
"Gas flow and Chemical Lasers" 1986, ed. by S. Rosenwaks (Springer Verlag. 1986) p.40.
((2)) M. GASTAUD
"Etude de sources laser à gaz carbonique" Rapport EDF. 26 Nov.1986.
((3)) S. IKUTA and S. FUJIWARA
In Technical Digest. CLEO 1985, paper TUC2.
((4)) N. TABATA et al
"Gas flow and Chemical Lasers" 1984, ed. by A.S. Kaye and A.C. Walker (Adam Hilger. 1984) p.1.
((5)) H.E. HUGEL
Proc. SPIE's 1986. Vol. 650.p.2
((6)) A.S. KAYE et al
"Gas flow and Chemical Lasers" 1982. ed. by. M. ONORATO (Plenum Press. 1982) p. 383
((7)) P. HOFFMANN
Proc. SPIE's 1986. Vol. 650. p. 23.
((8)) A.C. ECKBRETH and J.W. DAVIS
Appl. Phys. Letters. 19. 101. (1971)
((9)) W. J. WIEGAND and W.L. NIGHAN
Appl. Phys. Letters. 26. 554 (1975)

## Revendications

1. Laser à décharge dans un écoulement transversal turbulent, ce laser comportant :

- des moyens optiques (2) pour faire osciller ou circuler un rayonnement lumineux,
- une chambre de décharge (20) présentant une longueur entre une face amont (10, 22) et une face aval (12) qui s'étendent selon une largeur et une hauteur de cette chambre,
- des moyens de circulation (18, 28, 30) pour faire circuler un gaz actif dans cette chambre de décharge en formant un écoulement turbulent subsonique de ladite face amont à ladite face aval,
- et des moyens électriques (8, 12, 14) pour créer au moins une décharge électrique dans ce gaz actif à l'intérieur de cette chambre de décharge, entre au moins une électrode amont (8) et une électrode aval (12) situées dans lesdites faces amont (10, 22) et aval (12), respectivement, pour que cette décharge soit uniformisée et/ou stabilisée par ledit écoulement turbulent et permette à ce gaz d'amplifier ledit rayonnement lumineux,
- lesdits moyens de circulation comportant,
- une pluralité de passages d'introduction dans ladite face amont (10, 22) pour permettre l'introduction du gaz actif dans la chambre de décharge (20), chacun de ces passages correspondant à un module de décharge qui est la partie de ladite chambre à décharge dans laquelle circule le gaz introduit par cet orifice, ce module présentant une surface amont et une surface aval qui sont les parties desdites faces amont et aval qui sont occupées par ce module, respectivement,
- des passages d'évacuation (13) dans ladite face aval pour permettre l'évacuation du gaz actif hors de cette chambre,
- et des moyens de maintien de pression (30) pour maintenir un rapport de pressions à l'injection supérieur à 1, ce rapport étant celui de la pression dudit gaz actif à l'amont de ce passage d'introduction à la pression de travail de ce gaz dans ladite chambre de décharge,
- ce laser étant caractérisé par le fait que chaque dit passage d'introduction est un orifice d'injection (10) occupant une fraction minoritaire de l'aire de ladite surface amont et bordé d'une ou plusieurs parties réservées occupant le reste de cette face amont de manière que le gaz injecté par cet orifice forme un jet divergent correspondant (40) laissant de côté un ou plusieurs espaces en coin faisant parties dudit module de décharge correspondant (16),
- ledit orifice d'injection étant muni d'une dite électrode amont (8) pour former une décharge (44) dans ledit jet divergent (40) à partir de l'origine de celui-ci,
- au moins une partie d'au moins une dite électrode aval (12) étant répartie dans cette surface aval pour diffuser ladite décharge électrique dans tout le volume de jet.

2. Laser selon la revendication 1, caractérisé par le fait que ledit orifice d'injection occupe entre 5 et 30 % de l'aire de ladite surface amont,
   - ladite longueur de la chambre de décharge (20) étant comprise entre la moitié et le double de celle qui est nécessaire pour que chaque jet divergent occupe toute ladite surface aval dudit module de décharge correspondant.

3. Laser selon la revendication 2, caractérisé par le fait que ledit rapport de pressions à l'injection est compris entre 1,05 et 2.

4. Laser selon la revendication 2, caractérisé par le fait que ladite surface amont (10, 22) et ledit orifice d'injection (10) ont chacun un rapport de largeur à hauteur compris entre 0,5 et 2 et sont sensiblement concentriques de manière que lesdits espaces en coin (42) forment un anneau tout autour de la partie amont dudit jet divergent (40).

5. Laser selon la revendication 4, caractérisé par le fait que le rapport de la longueur de ladite chambre de décharge (20) à la plus petite dimension dudit orifice d'injection (10) est compris entre 2 et 20.

6. Laser selon la revendication 5, caractérisé par le fait que ledit rapport est compris typiquement entre 6 et 8.

7. Laser selon la revendication 1, caractérisé par le fait que ladite électrode amont (8) correspondant à un dit orifice d'injection (10) est unique et centrée sur cet orifice.

8. Laser selon la revendication 1, dans lequel plusieurs dits modules (16) se succèdent selon la largeur de ladite chambre à décharge (20), ledit rayonnement circulant ou oscillant selon cette largeur.

**9.** Laser selon la revendication 1, dans lequel lesdites électrodes amont (8) sont alimentées séparément à courant sensiblement prédéterminé par lesdits moyens électriques (14) et lesdites électrodes aval sont toutes constituées par une grille commune (12).

**10.** Laser selon la revendication 1, dans lequel lesdits moyens de circulation du gaz actif comportent un ventilateur (30) faisant circuler ce gaz en circuit fermé (28), et des moyens de refroidissement (32) et des moyens de régénération continue (34) de ce gaz sur ce circuit.

**Claims**

**1.** A laser with discharge in a turbulent transverse flow, the laser comprising:

optical means (2) for causing light radiation to circulate or oscillate;

a discharge chamber (20) having a length between an upstream face (10, 22) and a downstream face (12) which extends along a width and a height of said chamber;

circulation means (18, 28, 30) for circulating an active gas in said discharge chamber and forming a subsonic turbulent flow from said upstream face to said downstream face; and

electrical means (8, 12, 14) for establishing at least one electric discharge in said active gas inside said discharge chamber between at least one upstream electrode (8) and a downstream electrode (12) situated in said upstream and downstream faces (10, 20; 12) respectively, so that said discharge is made uniform and/or stable by said turbulent flow, thereby enabling said gas to amplify said light radiation;

said circulation means comprising:

a plurality of insertion passages through said upstream face (10, 22) enabling active gas to be inserted into said discharge chamber (20), each of said passages corresponding to a discharge module which is the portion of said discharge chamber in which the gas inserted via said orifice circulates, said module having an upstream surface and a downstream surface which are those portions of said upstream and downstream faces respectively that are occupied by said module;

evacuation passages (13) in said downstream face to enable said active gas to be evacuated from said chamber; and

pressure maintaining means (30) for maintaining a pressure ratio on insertion of more than one, said ratio being the ratio between the pressure of said active gas upstream from said insertion passage relative to the working pressure of said gas in said discharge chamber;

said laser being characterized by the fact that each of said insertion passages is an injection orifice (10) occupying a minority fraction of the area of said upstream surface and surrounded by one or more reserved portions occupying the remainder of said upstream face in such a manner that the gas injected via said orifice forms a corresponding diverging jet (40) leaving one or more corner spaces to one side constituting portions of the corresponding said discharge module (16);

said injection orifice being provided with one of said upstream electrodes (8) to form a discharge (44) in said diverging jet (10) starting at the origin thereof; and

at least a portion of at least one of said downstream electrodes (12) being distributed in said downstream surface in order to diffuse said electrical discharge throughout the volume of the jet.

**2.** A laser according to claim 1, characterized by the fact that said injection orifice occupies between 5% and 30% of the area of said upstream surface; and

said discharge chamber (20) length lies between one half and twice the length which is required to ensure that each diverging jet occupies all of the downstream surface of said corresponding discharge module.

**3.** A laser according to claim 2, characterized by the fact that said injection pressure ratio lies in the range 0.15 to 2.

**4.** A laser according to claim 2, characterized by the fact that each of said upstream surface (10, 22) and said injection orifice (10) has a width to height ratio lying in the range 0.5 to 2, said items being substantially concentric so that said corner spaces (42) constitute a ring around the upstream portion of said diverging jet (40).

**5.** A laser according to claim 4, characterized by the fact that the ratio of the length of said discharge chamber (20) to the smallest dimension of said injection orifice (10) lies in the range 2 to 20.

6. A laser according to claim 5, characterized by the fact that said ratio lies typically in the range 6 to 8.

7. A laser according to claim 1, characterized by the fact that said upstream electrode (8) corresponding to one of said injection orifices (10) is unique and is centered on said orifice.

8. A laser according to claim 1, in which a plurality of said modules (16) follow one another along the width of said discharge chamber (20), said radiation oscillating or circulating along said width.

9. A laser according to claim 1, in which said upstream electrodes (8) are powered separately with current which is substantially predetermined by said electrical means (14), and said downstream electrodes are all constituted by a common grid (12).

10. A laser according to claim 1, in which said active gas circulation means comprise a fan (30) causing the gas to circulate around a closed circuit (28), cooling means (32), and means (34) for continuously regenerating said gas on said circuit.

**Patentansprüche**

1. Entladungslaser mit einer turbulenten Querströmung, der aufweist:
   - optische Mittel (2), um eine Lichtstrahlung schwingen oder zirkulieren zu lassen,
   - eine Entladungskammer (20), die eine Länge zwischen einer stromaufwärts gelegenen Seite (10, 22) und einer stromabwärts gelegenen Seite (12) aufweist, welche sich entlang einer Breite und einer Höhe dieser Kammer erstreckt,
   - Umlauffördermittel (18, 28, 30), die dazu dienen, ein aktives Gas in der Entladungskammer unter Bildung einer turbulenten Unterschallströmung von der stromaufwärts gelegenen Seite zur stromabwärts gelegenen Seite strömen zu lassen,
   - und elektrische Mittel (8, 12, 14) zur Erzeugung mindestens einer elektrischen Entladung in dem aktiven Gas im Inneren der Entladungskammer zwischen mindestens einer stromaufwärts gelegenen Elektrode (8) und einer stromabwärts gelegenen Elektrode (12), welche in der stromaufwärts gelegenen Seite (10, 22) bzw. der stromabwärts gelegenen Seite (12) angeordnet sind, damit diese Entladung durch die turbulente Strömung vergleichmäßigt und/oder stabilisiert wird und das Gas die Lichtstrahlung verstärken kann,
   wobei die Umlauffördermittel umfassen:
   - eine Vielzahl von Einlässen in der stromaufwärts gelegenen Seite (10, 22) für den Eintritt des aktiven Gases in die Entladungskammer (20), wobei jeder dieser Einlässe einem Entladungsmodul entspricht, der denjenigen Teil der Entladungskammer bildet, in dem das durch diese Öffnung eintretende Gas strömt, wobei dieser Modul eine stromaufwärts gelegene Oberfläche und eine stromabwärts gelegene Oberfläche besitzt, die diejenigen Abschnitte der stromaufwärts bzw. der stromabwärts gelegenen Seite bilden, welche von diesem Modul eingenommen werden,
   - Auslässe (13) in der stromabwärts gelegenen Seite zum Abführen des aktiven Gases aus der Kammer,
   - und Druckhaltemittel (30) zur Aufrechterhaltung eines Druckverhältnisses größer als 1 beim Einblasen zwischen dem Druck des aktiven Gases vor dem Einlaß und dem Arbeitsdruck des Gases in der Entladungskammer,
   - wobei der Laser dadurch gekennzeichnet ist, daß jeder Einlaß eine Einblasöffnung (10) bildet, die einen kleinen Teil der stromaufwärts gelegenen Oberfläche bildet und von einem oder von mehreren unbenutzten Abschnitten umgeben ist, die den Rest dieser stromaufwärts gelegenen Oberfläche ausmachen, derart, daß das durch die Öffnung eingeblasene Gas einen entsprechend divergierenden Strahl (40) bildet, der einen oder mehrere Nischen unberührt läßt, die Bestandteil des entsprechenden Entladungsmoduls (16) sind,
   - wobei die Einblasöffnung mit einer sog. stromaufwärts gelegenen Elektrode (8) versehen ist, die im divergierenden Strahl (40) ab dessen Ursprung eine Entladung (44) erzeugt,
   - wobei mindestens ein Teil mindestens einer stromabwärts gelegenen Elektrode (12) in der stromabwärts gelegenen Oberfläche verteilt angeordnet ist, um die elektrische Entladung im gesamten Volumen des Strahls auszubreiten.

2. Laser nach Anspruch 1, dadurch gekennzeichnet, daß die Einblasöffnung zwischen 5 und 30 % des Flächeninhaltes der stromaufwärts gelegenen Oberfläche einnimmt, wobei die Länge der Entladungskammer (20) zwischen der Hälfte und dem Doppelten derjenigen Länge liegt, die nötig ist, damit jeder divergierende Strahl die gesamte stromabwärts gelegene Oberfläche des entsprechenden Entladungsmoduls bedeckt.

3. Laser nach Anspruch 2, dadurch gekennzeichnet, daß das Druckverhältnis beim Einblasen zwischen 1,05 und 2 liegt.

4. Laser nach Anspruch 2, dadurch gekennzeichnet, daß die stromaufwärts gelegene Oberfläche (10, 22) und die Einblasöffnung (10) jeweils ein Verhältnis von Breite zur Höhe zwischen 0.5 und 2 aufweisen und im wesentlichen konzentrisch zueinander angeordnet sind, derart, daß die Nischen (42) um den stromaufwärts gelegenen Abschnitt des divergierenden Strahls (40) einen Ring bilden.

5. Laser nach Anspruch 4, dadurch gekennzeichnet, daß das Verhältnis der Länge der Entladungskammer (20) zur kleinsten Abmessung der Einblasöffnung (10) zwischen 2 und 20 liegt.

6. Laser nach Anspruch 5, dadurch gekennzeichnet, daß das Verhältnis typischerweise zwischen 6 und 8 liegt.

7. Laser nach Anspruch 1, dadurch gekennzeichnet, daß die stromaufwärts gelegene, einer Einblasöffnung zugeordnete Elektrode (8) ganzteilig und auf die Öffnung zentriert ist.

8. Laser nach Anspruch 1, bei dem mehrere Module (16) entsprechend der Breite der Entladungskammer (20) einander folgen, wobei die Strahlung entlang dieser Breite zirkuliert oder schwingt.

9. Laser nach Anspruch 1, bei dem die stromaufwärts gelegenen Elektroden (8) einzeln mit einem Strom gespeist werden, der im wesentlichen durch die elektrischen Mittel (14) bestimmt ist, während alle stromabwärts gelegenen Elektroden aus einem gemeinsamen Gitter (12) bestehen.

10. Laser nach Anspruch 1, bei dem die Umlauffördermittel für das aktive Gas einen Ventilator (30), der das Gas in einem geschlossenen Kreislauf (28) umlaufen läßt, und Kühlmittel (32) sowie Mittel (34) zum kontinuierlichen Regenerieren des Gases im Kreislauf umfassen.

FIG.1

EP 0 301 495 B1

# FIG.2

# FIG.3

# FIG.4

EP 0 301 495 B1